# EUROPÄISCHE PATENTSCHRIFT

(11) **EP 2 365 200 B1**
(45) Veröffentlichungstag und Bekanntmachung des Hinweises auf die Patenterteilung: **14.11.2012**
(21) Anmeldenummer: 11151344.6
(22) Anmeldetag: 19.01.2011
(51) Int. Cl.: F02D 9/10, F16K 1/22, F16K 27/02

(54) **Klappenventil**
Flap valve
Soupape à clapet

(30) Priorität: 05.03.2010 DE 102010010533
(43) Veröffentlichungstag der Anmeldung: 14.09.2011
(73) Patentinhaber: Pierburg GmbH, 41460 Neuss (DE)
(72) Erfinder: Dr. Tönnesmann, Andres, 52066, Aachen (DE); Brunetti, Costantino, 58730, Fröndenberg (DE); Dr. Breuer, Michael, 52152, Simmerath (DE); Köster, Andreas, 45149, Essen (DE)
(74) Vertreter: Patentanwälte ter Smitten Eberlein Rütten Partnerschaftsgesellschaft

(56) Entgegenhaltungen:
- WO-A2-03/018229
- DE-A1-102008 020 136
- US-A- 5 315 975
- US-A- 6 006 722

## Beschreibung

Die Erfindung betrifft Klappenventil für eine Brennkraftmaschine mit einem Klappengehäuse, das einen Fluidkanalabschnitt aufweist, wobei der Fluidkanalabschnitt eine Zulaufzone, eine Steuerzone und eine Ablaufzone aufweist, wobei in der Steuerzone eine Klappenwelle mit einer Klappe gelagert ist, wobei die Längsachse der Steuerzone in Bezug auf die Fluidkanalachse unter einem Winkel α geschwenkt ist, wobei die Zulaufzone gegenüber der Ablaufzone um eine Versatzstrecke b versetzt angeordnet ist, wobei die Zulaufzone und die Ablaufzone eine um die Versatzstrecke b verringerte Breite der Klappenlänge aufweisen.

Ein derartiges Klappenventil ist beispielsweise aus der EP 589 733 B1 und der WO 03/018229 A2 bekannt. Diese Druckschrift beschreibt ein Drosselklappenventil mit einem Luftkanalabschnitt, der eine Zulaufzone, eine Steuerzone und eine Ablaufzone aufweist. Dabei ist die Längsachse der Steuerzone im Bezug auf die Luftkanalachse unter einem Winkel α geschwenkt und die Zulaufzone ist gegenüber der Ablaufzone um eine Versatzstrecke b versetzt angeordnet. Die Steuerzone ist so ausgebildet, dass der freie Durchtrittsquerschnitt des Luftkanals bei einem Verschwenken der Klappe in der Steuerzone lediglich geringfügig zu- oder abnimmt.

Bei bestimmten Anwendungen ist aber auch schon lediglich eine geringe Zu- oder Abnahme des Durchflussquerschnittes bei einer einzigen Winkelverstellung unerwünscht. Dies kann zum Beispiel dann der Fall sein, wenn ein Aktuator der das Klappenventil betätigt auch noch mit anderen zu verstellenden Elementen gekoppelt ist. Hierbei ist es dann gewünscht, dass der Durchflussquerschnitt über einen ganzen Winkelbereich gesperrt oder konstant gehalten wird. Auch ist die gezeigte Ausführungsform des Drosselklappenventils aufwendig in der Herstellung. Zudem ist die Montage der Klappe in dem gezeigten Gehäuse schwierig, vor allem vor dem Hintergrund einer guten Abdichtung im Lagerbereich der Klappenwelle im Gehäuse.

Der Erfindung liegt daher die Aufgabe zur Grunde, ein Klappenventil zu verschaffen, das die oben genannten Nachteile vermeidet.

Diese Aufgabe wird dadurch gelöst, dass die Klappe eine Rechteckform aufweist, an deren Ende jeweils Halbkreise angrenzen, wobei die Zulaufzone gegenüber der Ablaufzone um die Versatzstrecke b versetzt angeordnet ist, wobei die Zulaufzone und die Ablaufzone eine um die Versatzstrecke b verringerte Breite der Klappenlänge aufweisen, und wobei das Profil der Steuerzone in allen Winkelstellungen der Klappe der Einhüllenden der Klappe im Wesentlichen entspricht. Auf diese Weise wird ein einfach herzustellendes Klappenventil geschaffen, dass in der Steuerzone einen weiten abgesperrten Durchflussbereich gewährleistet. Um einen konstanten Durchflussbereich in der Steuerzone zu schaffen, kann das Profil der Steuerzone einen definierten Abstand zur Klappe aufweisen. Hinsichtlich der Gehäusefertigung ist es vorteilhaft, wenn der Radius r der Halbkreise größer oder gleich der Versatzstrecke x ist.

Die Erfindung wird nachfolgend anhand der Zeichnung näher erläutert, hierbei zeigt:
Figur 1 eine perspektivische Schnittansicht eines erfindungsgemäßen Klappenventils,
Figur 2 eine Schnittansicht des erfindungsgemäßen Klappenventils mit drei Klappenstellungen, und
Figur 3 die zu den drei Klappenstellungen passenden Querschnitte in Draufsicht des Klappengehäuses.

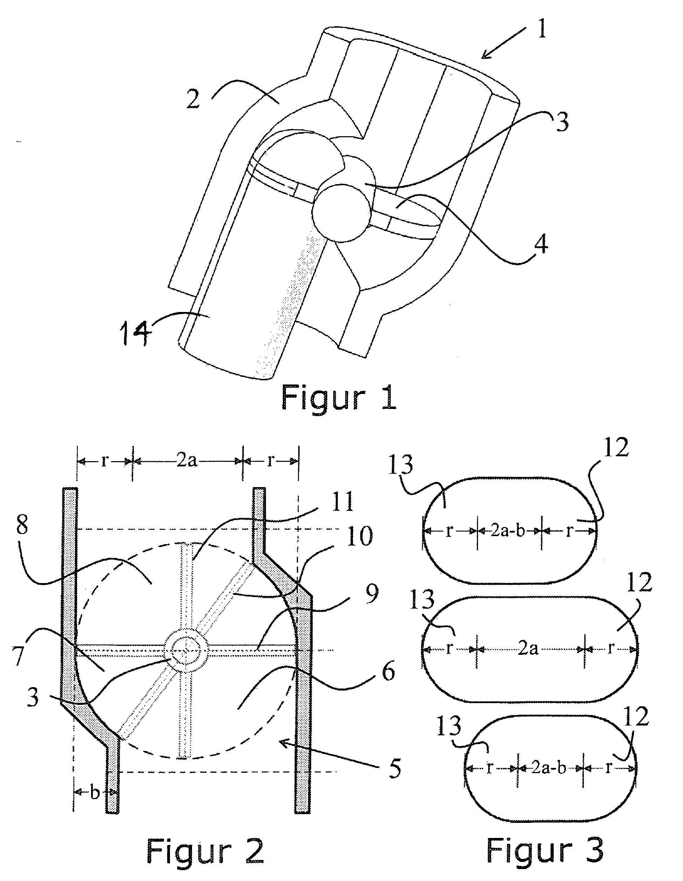

Figur 1 zeigt ein Klappenventil 1 für den Einsatz in einer Brennkraftmaschine in einer perspektivisch geschnittenen Ansicht.

Derartige Klappenventile finden ihren Einsatz als Drosselklappen, Bypassklappen und beispielsweise Abgasklappen. Dabei ist das Klappenventil im Wesentlichen wie folgt aufgebaut: in einem Klappengehäuse 2 ist eine Klappenwelle 3 gelagert, die auf bekannte Weise eine Klappe 4 aufweist. Wie insbesondere aus Figur 2 hervorgeht, besitzt das Klappengehäuse 2 einen Fluidkanalabschnitt 5, der sich in eine Zulaufzone 6, eine Steuerzone 7 und eine Ablaufzone 8 unterteilt. Dabei entspricht das Profil der Steuerzone 7 in allen Winkelstellungen der Klappe 4 der Einhüllenden der Klappe (siehe hierzu insbesondere Figur 3). Die Klappe 4 weist dabei eine Rechteckform mit an beiden Seiten angrenzenden Halbkreisen 12, 13 auf, die jeweils einen Radius r besitzen. Auf diese Art und Weise ist es möglich, eine Absperrung, aber auch ein Konstanthalten des Fluidstroms über einen bestimmten Winkelbereich zu gewährleisten. Dies kann insbesondere dann vorteilhaft sein, wenn ein Aktuator des Klappenventils 1 noch mit weiteren zu verstellenden Elementen gekoppelt ist. Je nach Drehrichtung der Klappe 4 ist eine schnelle kontinuierliche Erhöhung des Durchflussquerschnittes des Fluidkanalabschnittes 5 möglich oder eine langsame kontinuierliche Erhöhung. Im gezeigten Ausführungsbeispiel der Figur 2 sind 3 Positionen 9, 10 und 11 der Klappe dargestellt. Bei einer Verdrehung der Klappe 4 im Urzeigersinn über die Position 9 hinaus, wird der Durchflussquerschnitt kontinuierlich langsam erhöht. Bei einer Verdrehung der Klappe 4 gegen den Uhrzeigersinn über die Position 10 zur Position 11 wird dagegen der Durchflussquerschnitt stark und plötzlich erhöht. Diese Wirkung wird dadurch erreicht, dass die Klappe 4 derart geformt ist, dass sie bei ihrer Drehung einen Raum überstreicht, wie er von einer um einen Torus liegenden konvexen Hülle eingeschlossen wird. Die Klappe 4 entspricht dabei der in der Figur 3 zur Position 9 gehörenden Querschnittsfläche des Fluidkanalabschnittes 4. Sie setzt sich zusammen aus einem Rechteck mit der Länge 2a und der Breite 2r mit seitlich angrenzenden Halbkreisen, die jeweils einen Radius r aufweisen. Der Radius r ist damit gleich dem Radius des umlaufenden Kreisquerschnittes des Torus und a entspricht dem Umlaufradius. Wie schon oben beschrieben, ist der Fluidkanalabschnitt 5 des Klappengehäuses 2 aus der Zulaufzone 6, der Steuerzone 7 sowie der Ablaufzone 8 aufgebaut. Dementsprechend weist die Steuerzone im Bereich der Klappenstellung 9 einen größten Durchmesser von d=2×(a+r) auf. Zu Beginn, beziehungsweise zum Ende der Steuerzone, ist das Klappengehäuse 2 um die Versatzstrecke b verkürzt, derart, dass die Zulaufzone 6 und die Ablaufzone 8 um die Versatzstrecke b zueinander versetzt sind.

Ein weiterer Vorteil dieser Geometrie liegt in der einfachen Herstellbarkeit des Klappenventils 1, wenn der Fluidkanal - abschnitt 6 einer Fräsbearbeitung unterzogen werden soll. Unter der Voraussetzung, dass die Versatzstrecke b den Umlaufradius a des Torus nicht überschreitet, können die Flächen mit einem Fräswerkzeug (14), dessen Schneidflächen aus einem Zylinderstück mit aufgesetzter Halbkugel, beide vom Radius r, bestehen, abgefahren werden. Hierzu wird ein in Durchströmrichtung des Fluidkanalabschnittes 5 ausgerichteter Fräser (14) jeweils mit dem Halbkugelende voran von der Zu- und der Ablaufzone durch den Fluidkanal Abschnitt 5 bewegt. Die Bahn des Fräsers (14) besteht nur aus geradlinigen Abschnitten sowie aus einem Bogenstück zur Herstellung der Toruszone. Weder Fräser (14) noch das Klappengehäuse 2 müssen bei der Bearbeitung gekippt werden.

Im Fall dass das Profil der Steuerzone einen definierten Abstand zur Platte 4 aufweist, ist es möglich, über den Winkelbereich der Steuerzone einen weitgehend konstanten Fluidstrom zu gewährleisten.

## Patentansprüche

1. Klappenventil für eine Brennkraftmaschine mit einem Klappengehäuse (2), das einen Fluidkanalabschnitt (5) aufweist, wobei der Fluidkanalabschnitt (5) eine Zulaufzone (6), eine Steuerzone (7) und eine Ablaufzone (8) aufweist, wobei in der Steuerzone (7) eine Klappenwelle (3) mit einer Klappe (4) gelagert ist, wobei die Längsachse der Steuerzone (7) in Bezug auf die Fluidkanalachse unter einem Winkel α geschwenkt ist, wobei die Zulaufzone (6) gegenüber der Ablaufzone (8) um eine Versatzstrecke b versetzt angeordnet ist, wobei die Zulaufzone (6) und die Ablaufzone (8) eine um die Versatzstrecke b verringerte Breite der Klappenlänge aufweisen, **dadurch gekennzeichnet, dass** die Klappe (4) eine Rechteckform aufweist, an deren Enden jeweils Halbkreise (12, 13) angrenzen, derart, dass das Profil der Steuerzone (7) in allen Winkelstellungen der Klappe (4) der Einhüllenden der Klappe (4) im Wesentlichen entspricht.

2. Klappenventil nach Anspruch 1, **dadurch gekennzeichnet, dass** das Profil der Steuerzone (7) einen definierten Abstand zur Klappe (4) aufweist.

3. Klappenventil nach Anspruch 1 oder 2, **dadurch gekennzeichnet, dass** der Radius r der Halbkreise (12, 13) größer/gleich der Versatzstrecke x ist.

## Claims

1. A flap valve for an internal combustion engine, comprising a flap housing (2) with a fluid duct section (5), the fluid duct section (5) comprising an inflow zone (6), a control zone (7) and an outflow zone (8), a flap shaft (3) with a flap (4) being supported in the control zone (7), the longitudinal axis of the control zone (7) being shifted by an angle a with respect to the fluid duct axis, the inflow zone (6) being offset by an offset distance b with respect to the outflow zone (8), the width of the flap length in the inflow zone (6) and the outflow zone (8) being reduced by the offset distance b, **characterized in that** the flap (4) has a rectangular shape at each end of which semicircles (12, 13) adjoin such that, in any angular position of the flap (4), the profile of the control zone (7) substantially corresponds to the envelope of the flap (4).

2. The flap valve of claim 1, **characterized in that** the profile of the control zone (7) has a defined distance to the flap (4).

3. The flap valve of claim 1 or 2, **characterized in that** the radius r of the semicircles (12, 13) is larger/equal than/to the offset distance b.

## Revendications

1. Soupape à clapet destinée à un moteur à combustion interne, comprenant un boitier de soupape (2) avec une section d'un canal à fluide (5), ledit canal à fluide (5) comprenant une zone d'entrée (6), une zone de réglage (7) et une zone de sortie (8), un arbre de clapet (3) avec un clapet (4) étant supporté dans la zone de réglage (7), l'axe longitudinal de ladite zone de réglage (7) étant pivoté sous un angle a par rapport à l'axe du canal à fluide, ladite zone d'entrée (6) étant décalée par une distance de décalage b par rapport à ladite zone de sortie (8), ladite zone d'entrée (6) et ladite zone de sortie (8) ayant une largeur de la longueur du clapet réduite par la distance de décalage b, **caractérisé en ce que** ledit clapet (4) a une forme rectangulaire, aux extrémités de laquelle avoisinent des demi-cercles (12, 13) respectifs, de sorte que le profil de ladite zone de réglage (7) correspond essentiellement à l'enveloppe du clapet (4) dans chaque position angulaire du clapet (4).

2. Soupape à clapet selon la revendication 1, **caractérisée en ce que** ledit profil de ladite zone de réglage (7) a une distance définie jusqu'au clapet (4).

3. Soupape à clapet selon la revendication 1 ou 2, **caractérisée en ce que** le rayon r des demi-cercles (12, 13) est supérieur/égal à la distance de décalage b.
